# EUROPÄISCHE PATENTANMELDUNG

(11) **EP 3 144 045 A1**
(43) Veröffentlichungstag der Anmeldung: **22.03.2017**
(21) Anmeldenummer: 15185912.1
(22) Anmeldetag: 18.09.2015
(51) Int. Cl.: B01D 21/00, B01J 8/00, B03B 5/62

(54) **VERFAHREN UND VORRICHTUNG ZUM ABTRENNEN VON PARTIKELN EINER BESTIMMTEN GRÖSSE AUS EINER SUSPENSION**

(71) Anmelder: L'AIR LIQUIDE, Société Anonyme pour l'Etude et l'Exploitation des Procédés Georges Claude, 75007 Paris (FR); The Petroleum Oil and Gas Corporation of South Africa, Cape Town 7500 (ZA)
(72) Erfinder: Ruppel, Manfred, 63128 Dietzenbach (DE); Scharf, Kim, 60486 Frankfurt am Main (DE); Eichmann, Uwe, 60439 Frankfurt am Main (DE); Kirsten, Klaus, 55130 Mainz (DE)
(74) Vertreter: Keil & Schaafhausen Patent- und Rechtsanwälte PartGmbB

(57) **Zusammenfassung**

Die Erfindung umfasst ein Verfahren und eine Anlage zur Abtrennung von einer Suspension C aus einer Suspension A, wobei der Anteil von Partikeln P_{C} in der Suspension C, die einen Durchmesser kleiner als ein definierter Grenzkorndurchmesser aufweisen, um wenigstens den Faktor 2 größer ist als in der Suspension A. Die Suspension A (110) wird in einen sich vom Boden nach oben erstreckenden Behälter (100) eingeleitet und eine Suspension B wird in einem ersten Teilstrom (118) aus dem Behälter abgezogen, deren Anteil von Partikeln mit einem Durchmesser größer als der definierte Grenzkorndurchmesser gegenüber Suspension A erhöht ist. Dadurch, dass die Suspension C in einem zweiten Teilstrom (112, 113, 117) oberhalb des ersten Teilstroms (118) aus dem Behälter (100) abgezogen wird, indem die Strömungsgeschwindigkeit der Suspension C größer ist als die Sinkgeschwindigkeit der in ihr enthaltenen Partikel P_{C}, kann eine effektive Abtrennung erreicht werden.

## Beschreibung

Die Erfindung betrifft ein Verfahren und eine Vorrichtung zur Abtrennung von einer Suspension C aus einer Suspension A, wobei der Anteil von Partikeln P_{C} in der Suspension C, die kleiner als ein definierter Grenzkorndurchmesser sind, um wenigstens den Faktor 2 größer ist als in der Suspension A, wobei die Suspension A in einen sich vom Boden nach oben erstreckenden Behälter eingeleitet und wobei eine Suspension B aus dem Behälter abgezogen wird, deren Anteil von Partikeln mit einem Durchmesser größer als der definierte Grenzkorndurchmesser gegenüber Suspension A erhöht ist,.

Als Suspension bezeichnet man ein heterogenes Stoffgemisch aus einer Flüssigkeit und darin fein verteilten Festkörpern. Lässt man eine Suspension in einem Behälter stehen, so sinkt bei größerer Dichte des Feststoffes im Vergleich zu der reinen Flüssigkeit der Feststoff langsam auf den Boden und bildet ein Sediment. Die überstehende Flüssigkeit kann dekantiert und somit der Feststoff von der Flüssigkeit getrennt werden. Je kleiner ein Partikel ist, je geringer sein Dichteunterschied zur Flüssigkeit, und je höher die Viskosität der Flüssigkeit, desto langsamer geht die Sedimentation von statten. Auch Form und Struktur der Partikel beeinflussen die Sedimentation. Die Sedimentation lässt sich durch Zentrifugen beschleunigen.

Stoffeigenschaften einer Suspension, vor allem die Partikelgröße bzw. die Verteilung der Partikelgröße, lassen sich z. B. durch eine Ultraschalldämpfungsspektroskopie bestimmen. Dabei durchläuft eine Ultraschallwelle die Suspension, wobei die Intensität dieser Welle gedämpft wird. Die Stärke der Dämpfung ist abhängig von Stoffeigenschaften, Konzentration der Partikel sowie der Größe der suspendierten Partikel. Durch Zusammenhänge und Abhängigkeiten, insbesondere durch entsprechende Kalibrierung, lassen sich so Verteilungen von Partikeln in heterogenen Systemen bestimmen. Schwierig ist hingegen die gezielte Abtrennung von Partikeln einer bestimmten Größe.

Eine Auftrennung von Partikeln verschiedener mittlerer Durchmesser lässt sich prinzipiell in sogenannten Steigkammern erreichen. Wie beispielsweise in der DD 293 065 beschrieben wird dazu Gas von unten in eine Feststoffschüttung geleitet, wobei die Strömungsgeschwindigkeit des Gases so justiert ist, dass sie Partikel bis zu einer bestimmten Größe mitreißt, während andere Partikel ausschließlich leicht fluidisiert oder überhaupt nicht angehoben werden. Durch Variationen der Gasgeschwindigkeit können so Partikel unterschiedlicher Durchmesser abgetrennt werden. Variierende Abtrennungsmengen können erreicht werden, indem mehrere Steigkammern verwendet werden, die separat von unten mit Gas angeströmt werden.

US 8,603,343 B2 beschreibt ein Verfahren zur Abtrennung von Partikeln aus einer Suspension, bei der die Abtrennung von Partikeln und einer klaren Flüssigkeit durch eine spezielle Anordnung in einem Dekanter erreicht wird.

Die vorliegende Erfindung stellt sich nun die Aufgabe, Partikel, insbesondere gleicher Dichte, einer bestimmten Größenordnung aus einer Suspension abzutrennen. Dabei soll insbesondere ein Verfahren und eine Vorrichtung gefunden werden, die es auch erlaubt, Suspensionen, in denen Gasgemische oder Gas-Suspensionsgemische vorliegen, zu bearbeiten.

Diese Aufgabe wird durch ein Verfahren mit den Merkmalen gemäß Anspruch 1 gelöst. Dazu wird eine Suspension A in einen sich vorzugsweise vertikal vom Boden nach oben erstreckenden Behälter eingeleitet. Nach oben im Sinne der Erfindung heißt, dass der Boden des Behälters derart ausgebildet ist, dass er den kürzesten Abstand zur Erdoberfläche hat, wohingegen alle weiteren Teile die Seitenwände, Deckel etc. weiter von der Erdoberfläche entfernt sind. Der Boden kann dabei flach, jedoch auch geneigt gewählt oder gerundet ausgebildet sein.

Aus diesem Behälter wird eine Suspension B, die sich dadurch auszeichnet, dass sie einen Partikelanteil P_{B} mit einem bestimmten ersten mittleren Partikeldurchmesser aufweist, über eine Abflussleitung ausgeleitet. Die Partikel P_{B} enthalten dabei zu wenigstens 80 Gew.-%, bevorzugt zu wenigstens 90 Gew.-%, besonders bevorzugt zu wenigstens 95 Gew.-% Partikel, deren Durchmesser größer als der eines definierten Grenzkorndurchmessers ist.

Erfindungsgemäß wird über eine Abzugsleitung eine Suspension C in einem zweiten Teilstrom abgezogen, welche sich dadurch auszeichnet, dass der Anteil von Partikeln, die kleiner als ein definierter Grenzkorndurchmesser sind, um wenigstens den Faktor 2, bevorzugt wenigstens um den Faktor 5, besonders bevorzugt wenigstens um den Faktor 10 größer ist, als in der Suspension A. Dieser Teilstrom wird dabei oberhalb des ersten Teilstroms (Suspension B) abgezogen.

Als Anteil im Sinne der Erfindung ist das Gewicht der spezifischen Partikel in Relation zum Gewicht aller Partikel zu verstehen. Der Anteil P_{C} in der Suspension C ist daher das Gesamtgewicht aller Partikel mit einem Durchmesser kleiner als der definierte Grenzkorndurchmesser dividiert durch das Gesamtgewicht aller in der Suspension C enthaltenen Partikel.

Indem durch die Abzugsleitung der zweite Teilstrom (Suspension C) oberhalb des ersten Teilstroms (Suspension B) abgezogen wird, entsteht innerhalb des Behälters eine Strömung. Gleichzeitig wirkt die Erdanziehungskraft auf alle in der Suspension enthaltenen Partikel, wodurch diese sich in einer Sinkgeschwindigkeit zum Boden hinbewegen, die abhängig von der jeweiligen Partikelmasse und somit der individuelle Partikeldurchmesser ist. Günstiger Weise ist die durch den Abzug der Suspension C entstehende Strömung vektoriell unterschiedlich zur Wirkrichtung der Gravitation gerichtet. Die größeren Teilchen, die aufgrund ihres Gewichtes und damit verbunden auch ihrem größeren Partikeldurchmesser nach unten absinken, trennen sich somit von denjenigen Teilchen, bei denen Sinkgeschwindigkeit geringer als die Strömungsgeschwindigkeit ist. Indem hier die unterschiedliche Sinkgeschwindigkeit der Partikel in der Suspension in Abhängigkeit vom Durchmesser ausgenutzt wird und sehr langsam absinkende Partikel durch eine Strömung abgezogen werden, können kleine Partikel von größeren abgetrennt werden. Durch Variation der Abzugsströmung für die Suspension C können Partikel mit unterschiedlichen Eigenschaften abgezogen werden.

Insbesondere haben die Partikel selbst eine vergleichbare Dichte bzw. weisen eine vergleichbare stoffliche Zusammensetzung auf. So kann durch das erfindungsgemäße Verfahren in Abhängigkeit von der Größe getrennt werden. Prinzipiell ist es aber auch denkbar, mit diesem Verfahren Partikel mit der gleichen Größe, aber unterschiedlicher Dichte voneinander zu trennen, wobei diese Dichteunterschiede zum Beispiel von unterschiedlichen stofflichen Zusammensetzungen herrühren können.

Besonders günstig an diesem Verfahren ist es, dass anders als bei üblichen Sedimentierungen das Verfahren kontinuierlich durchgeführt werden kann, so dass Einbringung und Abziehen der Suspensionen derart erfolgt, dass die Füllmenge des Behälters annähernd konstant bleibt.

Insbesondere eignet sich die Erfindung dafür, suspendierte Katalysatoren von Feinkorn zu befreien, dessen definierter Grenzkorndurchmesser einen Wert zwischen 10 und 50 µm, bevorzugt zwischen 15 und 30 µm aufweist Vorzugsweise weist der als Suspension A in den Behälter eingespeiste Strom eine Feststoffkonzentration von 1 bis 60 Gew.-%, bevorzugt 20 bis 50 Gew.-% auf.

Die Erfindung eignet sich insbesondere auch, Partikel einer bestimmten Größe aus einem Gas-Suspensionsgemisch zu entfernen. Vorzugsweise wird hierzu das in der Suspension dispergierte Gas im Behälter durch Ausgasen separiert, was in der einfachsten Form dadurch geschieht, dass das Füllstandniveau im Behälter so einstellt wird, dass oberhalb des Füllstandniveaus eine Gasschicht ist, in die das Gas ausgasen kann. Indem die Suspension im Behälter nicht vollständig steht, wird das Ausgasen positiv beeinflusst.

In einer vorteilhaften Ausgestaltung herrscht im Behälter ein Druck von mehr als 10 bar, bevorzugt mehr als 20 bar und besonders bevorzugt von 25 bis 35 bar. Damit eignet sich der Einsatz dieses Verfahrens auch gut für höhere Prozessdrücke in der chemischen Industrie, während bei Zentrifugen aufgrund der großen kinetischen Energie der schnelldrehenden Rotoren in diesem Druckbereich erhebliche Sicherheitsvorkehrungen notwendig sind. Zudem ist Zentrifugieren unter Überdruck technisch sehr aufwändig und daher mit hohen Kosten verbunden.

Bevorzugt fließt Suspension A aufgrund eines hydrostatischen Druckgefälles in den Behälter, was bedeutet, dass die Vorrichtung vorzugsweise so angeordnet wird, dass der Druckunterschied zwischen dem Punkt der Entnahme des Suspensionsstroms A und dem Punkt der Rückspeisung der Suspension B einen Betrag aufweist, der eine ausreichende Strömung durch die Vorrichtung bewirkt, aber nicht zu vermeidbarer Abrasion an der technischen Ausrüstung oder den strömenden Partikeln führt. Findet Entnahme und Rückspeisung aus dem und in den selben Behälter statt, lässt sich diese treibende Kraft durch den vertikalen Abstand von Entnahme - und Rückspeispunkt einstellen Eine geeignete Drossel, die in die Zufuhrleitung der Suspension A und / oder der Austragsleitung der Suspension B installiert wird, kann die Strömungsgeschwindigkeit der Suspension und den Füllstand in der Vorrichtung ebenfalls positiv beeinflussen, ist aber für die Erfindung nicht prinzipiell erforderlich.

Andererseits ist es auch denkbar, Suspension A einzupumpen, um so eine größere Flexibilität hinsichtlich der Anordnung der gesamten Anlage zu erreichen.

Die Erfindung umfasst weiterhin auch eine Vorrichtung zum Abtrennen von Partikeln eines bestimmten mittleren Durchmessers aus einer Suspension A mit den Merkmalen des Anspruchs 7. Eine solche Vorrichtung umfasst einen Behälter, wenigstens eine Zuleitung für die Suspension A in den Behälter und wenigstens ein Abfluss für eine Suspension B mit einer Partikelfraktion P_{B}, bei der wenigstens 80 Gew.-%, bevorzugt wenigstens 90 Gew.-% und besonders bevorzugt wenigstens 95 Gew.-% der Partikel einen Durchmesser aufweisen, der größer als ein definierter Grenzkorndurchmesser ist. Erfindungsgemäß weist eine solche Vorrichtung zudem eine Abflussleitung für eine Suspension C auf, die eine Partikelfraktion P_{C} enthält, bei der der Gewichtsanteil von Partikeln, die kleiner als ein definierter Grenzkorndurchmesser sind, um wenigstens den Faktor 2, bevorzugt wenigstens um den Faktor 5, besonders bevorzugt wenigstens um den Faktor 10 größer ist, als in der Suspension A.

Diese Abflussleitung führt zu einer angeschlossenen Ausrüstung, bevorzugt einem Behälter, worin ein Druck herrscht, der geringer ist als der Druck in der Vorrichtung. Dieses Druckgefälle ist bevorzugt die treibende Kraft für die Strömung. Alternativ kann diese Strömung auch durch eine Pumpe oder eine andere Methode zur Druckerhöhung in der Vorrichtung, oder der Druckabsenkung in der angeschlossenen Ausrüstung erzeugt werden. Die so erzeugte Strömungsgeschwindigkeit der Suspension C in der Vorrichtung ist größer als die Sinkgeschwindigkeit der in ihr enthaltenen Partikel P_{C}.

Vorzugsweise erstreckt sich der Behälter in seiner Gesamthöhe vom Boden nach oben, wobei der Abfluss für die Suspension B gemessen vom Boden bzw. dem tiefsten Punkt des Behälters maximal in einer Höhe von 20 % der Gesamthöhe angeordnet ist. Vorzugsweise findet sich der Abfluss für die Suspension B am tiefsten Punkt des Behälters, so dass alle abgesunkenen Partikel aus dem Behälter entfernt werden können.

Vorzugsweise befindet sich die Abflussleitung für die Suspension C oberhalb des Abflusses für die Suspension B. Dadurch können die noch nicht abgenommenen Partikel durch die entstehende Abzugsströmung abgetrennt werden, wohingegen größere und damit schwerere Partikel auf den Boden sinken und damit den Bereich des Behälters verlassen, von dem die Suspension C abgezogen wird.

Nichtdestotrotz ist jedoch auch denkbar, den Behälter mit großer Breite auszubilden und die Abflussleitung für Suspension C gegenüber der Zufuhrleitung von Suspension A vorzusehen. Über die zurückzulegende Strecke von Zufluss zum Abfluss würden dann auch schwere Partikel auf den Boden absinken, während leichte Partikel durch die Strömung am gegenüberliegenden Abflussrohr für die Suspension C ausgetragen werden.

Vorzugsweise weist der Behälter wenigstens eine Zwischenwand auf, durch die zwei, nicht vollständig voneinander getrennte Kammern entstehen. Vorzugweise mündet dabei die Zuleitung für Suspension A in der ersten Kammer und der Abzug der Suspension C findet sich in einer anderen Kammer. Dadurch wird gewährleistet, so dass es nicht zu einem Strömungskurzschluss zwischen Zu-und Ableitung kommt, sondern alle Partikel ausreichend lange im System verbleiben, dass schwerere Partikel nach unten absinken können.

Besonders begünstigt ist dabei, wenn die Kammern im unteren Bereich offen sind. Unterer Bereich im Sinne der Erfindung meint dabei, dass die Zwischenwände nicht direkt an den Boden des Behälters angrenzen. Dies ist besonders begünstigt, da so die Partikel von der Zuleitung aufgrund der Anordnung der Zwischenwand gezwungenermaßen absinken, wobei bevorzugt die schwereren Partikel vollständig absinken und sich somit von den leichteren, der mit der Abflussströmung ausgetragenen Partikeln, abtrennen lassen.

Besonders bevorzugt mündet die Zuleitung in der ersten Kammer, in welcher mitgerissenes Gas aus der Suspension durch Entgasen entweicht und durch einen Gasauslass abgeführt wird.

Eine besonders begünstigte Ausgestaltung der Erfindung sieht drei Kammern vor, so dass zwei Zwischenwände vorhanden sind. Dabei weist die erste Kammer die Zuflussleitung für die Suspension A auf, wohingegen die beiden anderen Kammern je eine Abzugsleitung für die Suspension C aufweisen. Dies hat den Vorteil, dass durch Ventile in den Abzugsleitungen jeweils eine der Abscheidekammern vom Abzug ausgeschlossen werden kann, so dass unterschiedliche Mengen an Suspension C aus dem Behälter abgezogen werden können, ohne dass die Strömungsgeschwindigkeit in der/den verbleibenden Abscheidekammer(n) und somit auch der mittlere Durchmesser der abgezogenen Partikel verändert wird.

Besonders bevorzugt ist dabei, wenn die Querschnittsfläche der zweiten Kammer zur Querschnittsfläche der dritten Kammer ein Verhältnis zueinander ausweisen, dass zwischen 1:0,2 bis 1:5 liegt und bevorzugt 1:2 ist" wobei die Querschnittsfläche bevorzugt parallel zu dem Boden zu sehen ist. Dadurch entstehen drei verschiedene mögliche Entnahmemengen, nämlich die Entnahme aus der kleineren Kammer, die Entnahme aus der größeren Kammer und die Entnahme aus beiden Kammern. Dieses System lässt sich auch auf eine noch größere Anzahl von Kammern übertragen.

Günstig ist zudem ein konischer Boden, da er ein tatsächliches Absetzen von Partikeln (Sedimentbildung) verhindert, insbesondere, wenn die Abflussleitung für die Suspension B am tiefsten Punkt des Bodens vorgesehen ist.

Die Erfindung umfasst zudem die Verwendung der Vorrichtung zum Abtrennen von deaktiviertem Katalysator aus einem Produktstrom einer Fischer-Tropsch-Synthese. In einer Fischer-Tropsch-Synthese wird Synthesegas, welches im Wesentlichen ein Gemisch aus Wasserstoff und Kohlenmonoxid ist, zu längerkettigen Kohlenwasserstoffketten umgesetzt. Unter anderem wird diese Reaktion in sogenannten Blasensäulenreaktoren durchgeführt. Das Synthesegas wird hier durch eine Suspension von Katalysatorpartikeln und im Prozess gebildeten Kohlenwasserstoffen geleitet, wodurch eine Verwirbelung bzw. Aufschlämmung der Katalysatorpartikel verursacht wird. Dabei wird ein Großteil des eingesetzten Synthesegases am Katalysator zu den längerkettigen Kohlenwasserstoffen umgesetzt, wobei diese Kohlenwasserstoffe sowohl gasförmig als auch flüssig vorliegen. Nicht umgesetztes Synthesegas wird nach dem Verlassen des Reaktors vom gasförmigen Produktstrom abgetrennt und erneut dem Reaktor zugeführt.

Die für diesen Prozess verwendeten metallischen Katalysatoren, im Wesentlichen Cobalt oder Eisen sind auf der Oberfläche von Trägerpartikeln aus z.B. Aluminiumoxiden aufgebracht. Diese Systeme werden im Folgenden als Katalysatorpartikel bezeichnet. Die Katalysatorpartikel werden durch die aufsteigenden Blasen und zusätzliche Vorrichtungen in dem Reaktor verwirbelt und innerhalb der Reaktorführung so verteilt, dass eine möglichst gleichmäßige Katalysatorkonzentration über die gesamte Höhe und den Querschnitt des Reaktors vorliegt. Unvermeidlicher Weise kommt es dabei auch zu mechanischen Belastungen der Katalysatorpartikel durch Stöße der Partikel untereinander sowie Reibung/Kollision der Partikel mit den Einbauten des Reaktors, wie etwa Wärmetauscher, Vorrichtung zur Gasverteilung, Vorrichtungen zur Produktabtrennung und andere. Zusätzliche Belastungen entstehen durch Druckschwankungen und Verdampfung von Reaktionsprodukten in den Poren der Katalysatorpartikel. Auf Dauer erzeugen diese mechanischen Belastungen Katalysatorbruchstücke.

Es hat sich nun herausgestellt, dass die Mechanismen, die zum mechanischen Verfall der Katalysatorpartikel führen, alle Partikel in gleicher Weise betreffen. Damit ist die tatsächliche Größe der Katalysatorpartikel im Verhältnis zur mittleren Größe der eingesetzten Katalysatorpartikel ein Maß dafür, wie lange die jeweiligen Katalysatorpartikel bereits im System vorhanden sind. Je länger die einzelne Katalysatorpartikel bereits eingesetzt wurden, umso kleiner sind sie, da sie eine entsprechend längere Zeit der Belastung im System ausgesetzt waren. Die feinsten Partikel sind also diejenigen Partikel, die den meisten Zerfällen unterworfen sind und somit auch am längsten im Reaktor waren. Aufgrund dieser langen Verwendung haben folglich die kleinsten Partikel auch die geringste chemische Aktivität. Das Entfernen der feinsten und ältesten Partikel und das Ersetzen des entfernten Katalysators durch frischen Katalysator dient also der Aufrechterhaltung der Reaktionsfähigkeit des Reaktionsgemisches.

Der Erfindung liegt somit auch die Idee zugrunde, kontinuierlich oder in regelmäßigen Intervallen die kleinen Partikel abzutrennen und somit inaktiven Katalysator aus dem System zu entfernen. Gleicherweise muss dann neuer, aktiver Katalysator aufgefüllt werden. Damit kann eine gleichmäßige Katalysatoraktivität der Anlage gewährleistet werden. Im Idealfall ist es sogar möglich, Standzeiten zum Katalysatortausch völlig zu vermeiden und die Anlage über viele Jahre hinweg mit einem kontinuierlich ausgetauschten Katalysator zu betreiben. Es wird so die Reaktionsfähigkeit des Gemisches aus Kohlenwasserstoffen und Katalysator im beschriebenen Reaktor im kommerziellen Betrieb aufrechterhalten.

Üblicherweise wird bei Fischer-Tropsch-Reaktionen bisher der mit dem Produkt ausgeführte Katalysatoranteil isoliert und verworfen oder aber vollständig rezirkuliert. Eine gezielte Entnahme von überwiegend feinen und/oder deaktivierten Partikeln findet nicht statt.

Weitere Merkmale, Vorteile und Anwendungsmöglichkeiten der Erfindung ergeben sich auch aus der nachfolgenden Beschreibung der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen
- Fig. 1: schematische Darstellung einer erfindungsgemäßen Anlage,
- Fig. 2: schematische Darstellung eines Fischer-Tropsch-Verfahrens nach dem Stand der Technik und
- Fig. 3.: schematische Darstellung eines Fischer-Tropsch-Verfahrens gemäß der Erfindung.

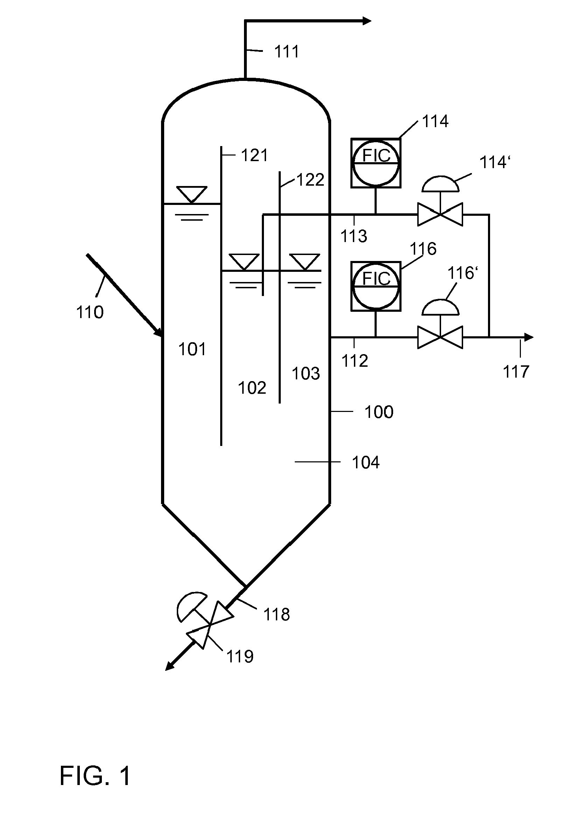

Fig. 1 zeigt schematisch die erfindungsgemäße Vorrichtung, um feine Partikel aus dem Gesamtstrom zu separieren.

Der hierbei verwendete Behälter 100 weist eine Zuleitung 110 auf, über die eine Suspension A in den Behälter eingeführt wird. Durch die Zwischenwände 121 und 122, die sich nicht bis zum Boden erstrecken, entstehen drei Kammern 101, 102 und 103, wobei die Zuleitung 110 in die Kammer 101 mündet.

Eventuell in der Suspension A enthaltenes Prozessgas tritt hier über die angedeutete Oberfläche der Suspension aus und kann über Leitung 111 abgeführt werden. Die verbleibende Suspension wird aufgestaut. Beide nachgeschalteten Kammern 102 und 103 weisen zwei unterschiedliche Größen auf, bei denen das Verhältnis der Querschnittsfläche der Kammer 102 im Verhältnis zur Querschnittsfläche der Kammer 103 eins zu zwei beträgt.

Über die Leitungen 112, und 113 kann Suspension C, die die Partikel P_{C} enthält, in der der Gewichtsanteil von Partikeln, die kleiner als ein definierter Grenzkorndurchmesser sind, um wenigstens den Faktor 2 größer ist, als in der Suspension A, aus den Kammern 102 und 103 abgezogen werden. Der Mengenstrom an Suspension C ist über die Regelvorrichtung 114 und das zugehörige Ventil 114' bzw. Regelvorrichtung 116 und zugehöriges Ventil 116' regelbar. Über die Entnahme des Stroms an Suspension C kann eine Strömungsgeschwindigkeit in den Kammern 102 und 103 angelegt werden. Mit zunehmender Partikelgröße nimmt die Sinkgeschwindigkeit von Partikeln zu. Ist die Sinkgeschwindigkeit des Partikels größer als die Strömungsgeschwindigkeit in den Abscheidekammern 102 und 103, dann wird das Partikel über Leitung 118 mit dem Regelvorrichtung 119 als Suspension B ausgetragen, die die Partikel P_{B} enthält, bei der wenigstens 80 Gew.-% der Partikel einen Durchmesser aufweisen, der größer als ein definierter Grenzkorndurchmesser ist, ausgetragen. Ist das Partikel jedoch kleiner, und seine Sinkgeschwindigkeit dadurch geringer als die durch die Abflussleitungen 112 und 113 entstehende Strömungsgeschwindigkeit in den Abscheidekammern 102 und 103, dann wird das Partikel dort über Leitung 112 oder 113 ausgetragen.

Mit der Auswahl der verwendeten Kammern zur Abtrennung, nämlich nur die kleinere Kammer, nur die größere Kammer oder beide Kammern parallel, kann die Menge der ausgetragenen Suspension variiert werden, ohne dass sich dadurch die Strömungsgeschwindigkeit in der Kammer und damit die Größe der ausgetragenen Partikel ändert. Die konstruktive Festlegung der Querschnittsfläche für die Kammern erfolgt entsprechend der angestrebten Grenzkorngröße, also derjenigen Partikelgröße die abgeführt werden soll. Weitere Faktoren, die hier einfließen, sind Dichteunterschiede zwischen dem Feststoff und der umgebenden Flüssigkeit.

Erfindungsgemäß läuft das beanspruchte Verfahren dann besonders trennscharf ab, wenn ein konstantes Niveau der Flüssigkeit in den beiden Kammern 102 und 103 gewährleistet ist. Nur dann ist sichergestellt, dass die Partikel in den der Kammern 102 und 103 eine ausreichend beruhigte Zone passieren müssen und somit tatsächlich Sinkgeschwindigkeit und Strömungsgeschwindigkeit miteinander konkurrieren und es nicht an einzelnen Stellen zu einem Austrag von größeren Partikeln durch lokal größere Strömungsgeschwindigkeiten kommt.

Erfindungsgemäß kann das Verfahren kontinuierlich als auch alternierend betrieben werden. Vorteilhaft kann auch sein, eine solche Anlage zu vervielfachen, parallel betriebene Reaktoren zur Generierung der Suspension A zu verwenden, so dass die erfindungsgemäße Vorrichtung alternierend von mehreren Reaktoren beschickt wird. Prinzipiell ist es auch denkbar, dass mehrere Ströme vereint in die erfindungsgemäße Vorrichtung eintreten.

Zudem kann es sinnvoll sein, den Druck im Behälter durch Zufuhr von Stickstoff zu regeln. Dieser Stickstoff, der beispielsweise aus einer Abgasaufbereitung stammen kann, kann dann über Leitung 111 wieder abgeführt werden.

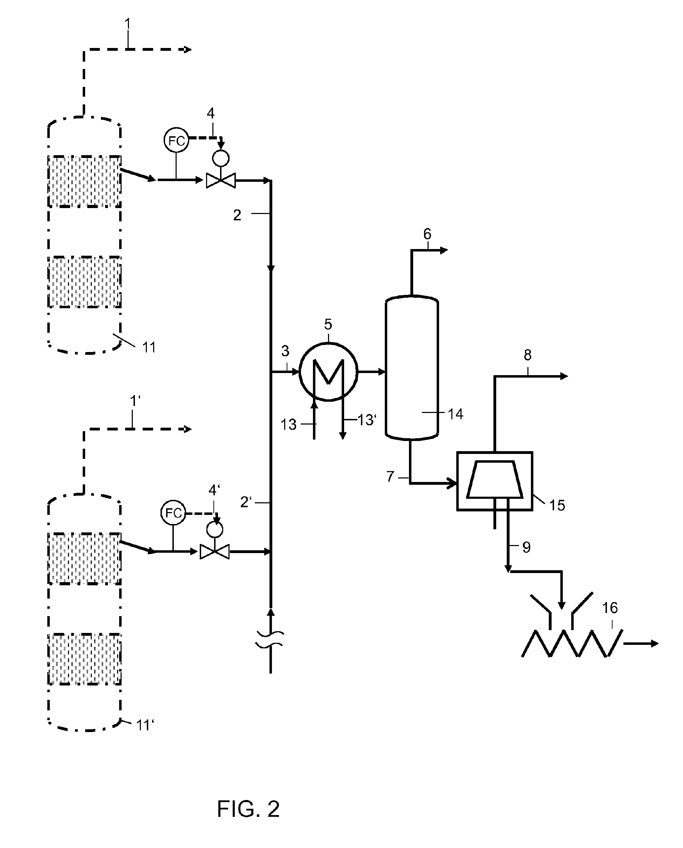

Fig. 2 zeigt die Einbindung einer aus dem Stand der Technik bekannten Anlage in einer Fischer-Tropsch-Synthese.

Aus den beiden parallel geschalteten Blasensäulenreaktoren 11 und 11' wird ein kontinuierlicher Prozessstrom entnommen und über die Leitung 2 und 2' abgeführt. Die Entnahme dieses Stromes kann über die Regeleinrichtung 4 bzw. 4' bemessen werden. Die Leitungen 2 und 2' münden dann in der Leitung 3, über die der gesammelte Strom in einen Wärmetauscher 5 und in einen Vorratsbehälter 14 geführt wird.

Das Wärmetauschermedium wird über die Leitung 13, 13' zu- bzw. wieder abgeführt. In dem Vorratsbehälter 14 wird der Druck durch Zuleitung von Stickstoff mit erhöhtem Druck und gegebenenfalls der Ableitung von Stickstoff über Leitung 6 in einer Abgasaufbereitung geregelt.

Aus dem Vorratsbehälter wird die Suspension über Leitung 7 einer Zentrifuge 15 zur Abtrennung der enthaltenen Feststoffe zugeführt.

Dort abgetrennte leichte Phase wird der Aufbereitung der enthaltenen Fischer-Tropsch-Produkte mittels Leitung 8 zugeführt. Die schwere Phase wird über Leitung 9 einer Abkühlvorrichtung 16 zugeführt. Die Suspension kann anschließend in nicht dargestellter Weise entsorgt oder wieder aufbereitet werden.

Tabelle 1 zeigt für eine Verfahrensführung nach Figur 2 spezifische Parameter einzelner Ströme, die auf die beiden Reaktoren 11 und 11 ' aufgeteilt werden und je einen Gesamtmassenstrom von mit je 3565 kg/h aufweisen. Entfernt werden Partikel mit einer Korngröße von 25 µm.

**Tabelle 1: Stromzusammensetzung bei einer Verfahrensgestaltung gem. Fig. 2.**

| | 2,2' | 3 | 7 | 9 | 8 |
|---|---|---|---|---|---|
| Massenstrom aller Partikel (kg/h) | 1069,6 | 7130 | 7130 | 4750 | 2380 |
| Temperatur (°C) | 234 | 234 | 150 | 148 | 148 |
| Druck (bar(g)) | 10 | 10 | 9,5 | 0,2 | 0,2 |
| Massenstrom der Partikel unter der Grenzkorngröße (kg/h) | 38,5 | 77 | 77 | 75,9 | 1,1 |
| Massenstrom der Partikel über der Grenzkorngröße (kg/h) | 1031 | 2062 | 2062 | 2061,9 | 0,1 |

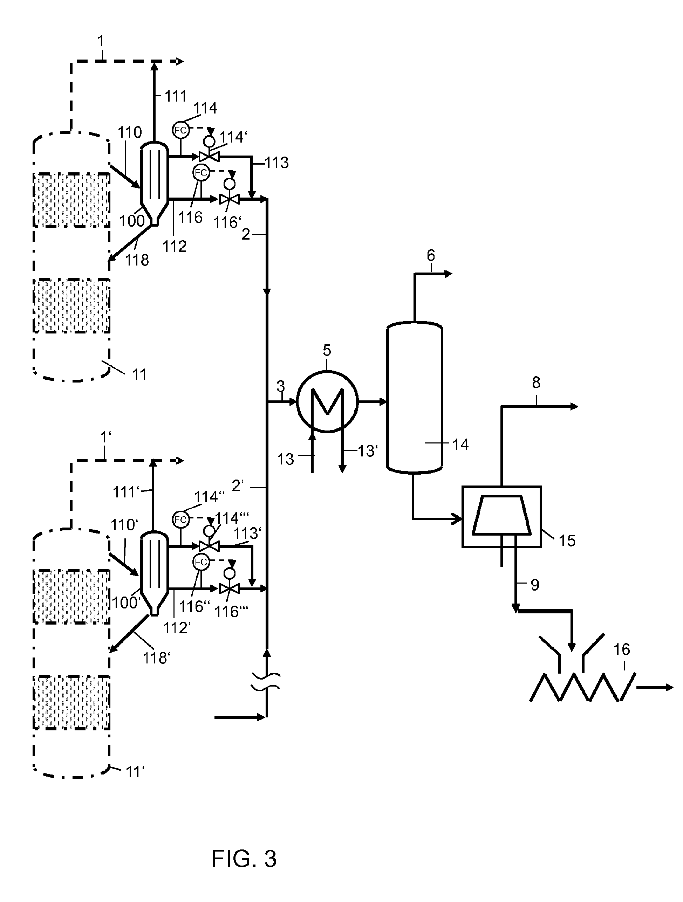

Fig. 3 zeigt die Einbindung einer erfindungsgemäßen Vorrichtung in einer Fischer-Tropsch-Synthese. Aus den Blasensäulenreaktoren 11 und 11' wird wieder über Leitung 1 und 1' die entstehenden gasförmigen Produkte weitestgehend abgeleitet.

Über Leitung 110 und 110' wird ein kontinuierlicher Produktstrom, der flüssige Kohlenwasserstoffe, Katalysatorpartikel und teilweise auch gasförmige Kohlenwasserstoffe enthält, entnommen und dem Behälter 100 bzw. 100' zugeführt. Dieser Behälter 100, 100' ist wie in Fig. 1 dargestellt ausgeführt.

Im Behälter 100 und 100' wird zunächst das im zuströmenden Produkt enthaltene Gas abgeschieden und über Leitung 111 bzw. 111' mit dem Abgas aus dem Blasensäulenreaktor 11/11' in Leitung 1/1' vereinigt und abgeführt.

Über Leitung 118 bzw. 118', in welcher ein nicht dargestelltes Regelvorrichtung 119 bzw. 119' vorgesehen ist, gelangt die Suspension B, die eine Partikelfraktion P_{B} enthält, bei der wenigstens 80 Gew.-% der Partikel einen Durchmesser aufweisen, der größer als ein definierter Grenzkorndurchmesser ist, zurück in den Blasenreaktor 11 bzw. 11'.

Ein oder mehrere Teilströme mit der Suspension C, die eine Partikelfraktion P_{C} enthält, in der der Gewichtsanteil von Partikeln, die kleiner als ein definierter Grenzkorndurchmesser sind, um wenigstens den Faktor 2 größer ist, als in der Suspension A, werden geregelt über Leitung 112 bzw. 112' und/oder 113 bzw. 113' aus dem Behälter 100 bzw. 100' abgeführt und über Leitung 2, 2' in die gemeinsame Leitung 3 eingespeist. Die weitere Ausgestaltung entspricht der in Fig. 2 erläuterten.

Tabelle 2 beschreibt die Stromzusammensetzung bei der in Figur 3 gezeigten Einbettung der Erfindung in ein Fischer-Tropsch-Verfahren. Dabei wird ein Gesamtmassenstrom von Wachs und Partikeln von je 53526 kg/h auf die zwei Reaktoren 11 und 11' gegeben, um Partikel mit einer Korngröße von 25 µm und kleiner aus dem System zu entfernen.

**Tabelle 2: Stromzusammensetzung bei einer Verfahrensgestaltung gem. Fig. 3.**

| | 110, 110' | 113 | 2 | 3 | 7 | 9 | 8 |
|---|---|---|---|---|---|---|---|
| Massenstrom aller Partikel (kg/h) | 16058 | 3509 | 5168 | 10336 | 10336 | 331 | 10005 |
| Temperatur (°C) | 234 | 234 | 234 | 234 | 150 | 148 | 148 |
| Druck (bar(g)) | 32 | 10 | 10 | 10 | 9,5 | 0,2 | 0,2 |
| Massenstrom der Partikel unter der Grenzkorngröße (kg/h) | 578 | 26,1 | 38,5 | 77 | 77 | 72,3 | 4,7 |
| Massenstrom der Partikel über der Grenzkorngröße (kg/h) | 15480 | 26,1 | 38,5 | 77 | 77 | 72,3 | 4,7 |

### Bezugszeichenliste

- 1 - 3: Leitung
- 4, 4': Regelvorrichtung
- 5: Wärmetauscher
- 6 - 9: Leitung
- 11, 11': Blasensäulenreaktor
- 13: Leitung
- 14: Vorratsbehälter
- 15: Zentrifuge
- 16: Kühlvorrichtung
- 100, 100': Behälter
- 101 - 103: Kammer
- 104: unterer Bereich
- 110 - 113': Leitung
- 114 - 114"': Regelvorrichtung
- 116 - 116"': Regelvorrichtung
- 117, 118: Leitung
- 119: Regelvorrichtung
- 121, 122: Trennwand

## Patentansprüche

1. Verfahren zur Abtrennung von einer Suspension C aus einer Suspension A, wobei der Anteil von Partikeln P_{C} in der Suspension C, die einen Durchmesser kleiner als ein definierter Grenzkorndurchmesser aufweisen, um wenigstens den Faktor 2 größer ist als in der Suspension A, wobei die Suspension A in einen sich vom Boden nach oben erstreckenden Behälter eingeleitet wird und wobei eine Suspension B aus dem Behälter abgezogen wird, deren Anteil von Partikel mit einem Durchmesser größer als der definierte Grenzkorndurchmesser gegenüber Suspension A erhöht ist, **dadurch gekennzeichnet, dass** die Suspension C in einem zweiten Teilstrom oberhalb des ersten Teilstroms aus dem Behälter dadurch abgezogen wird, dass die Strömungsgeschwindigkeit der Suspension C größer ist als die Sinkgeschwindigkeit der in ihr enthaltenen Partikel P_{C}.

2. Verfahren nach Anspruch 1, **dadurch gekennzeichnet, dass** das Verfahren kontinuierlich und mit stationären Betriebsbedingungen durchgeführt wird.

3. Verfahren nach Anspruch 1 oder 2, **dadurch gekennzeichnet, dass** der definierte Grenzkorndurchmesser einen Wert zwischen 10 und 50 µm aufweist.

4. Verfahren nach einem der vorhergehenden Ansprüche, **dadurch gekennzeichnet, dass** die Suspension A ein Gas enthält.

5. Verfahren nach Anspruch 4, **dadurch gekennzeichnet, dass** das Gas im Behälter durch Ausgasen separiert und anschließend abgezogen wird.

6. Verfahren nach einem der vorhergehenden Ansprüche, **dadurch gekennzeichnet, dass** im Behälter ein Druck von mehr als 10 bar herrscht.

7. Verfahren nach einem der vorhergehenden Ansprüche, **dadurch gekennzeichnet, dass** Suspension A aufgrund einer angelegten oder einer hydrodynamischen Strömung in den Behälter einströmt.

8. Vorrichtung zur Abtrennung von einer Suspension C aus einer Suspension A, wobei der Gewichtsanteil von Partikeln P_{C} in der Suspension, die kleiner als ein definierter Grenzkorndurchmesser sind, um wenigstens den Faktor 2 größer ist als in der Suspension A, umfassend einen Behälter (100), mindestens einer Zuleitung (110) für die Suspension A in den Behälter (100) und mindestens einen Abfluss (118) für eine Suspension B, deren Anteil von Partikel mit einem Durchmesser größer als der definierte Grenzkorndurchmesser gegenüber Suspension A erhöht ist, **dadurch gekennzeichnet, dass** eine Abflussleitung für eine Suspension C vorgesehen ist, wobei durch wenigstens eine Vorrichtung (114, 114', 116, 116') eine Strömung derart angelegt wird, dass die Strömungsgeschwindigkeit der Suspension C größer ist als die Sinkgeschwindigkeit der in ihr enthaltenen Partikel P_{C} und wobei wenigstens eine Abzugsleitung (112, 113) für die Suspension C oberhalb des Abflusses (118) für die Suspension B angeordnet ist.

9. Vorrichtung nach Anspruch 8, **dadurch gekennzeichnet, dass** sich der Behälter (100) zylinderförmig mit einer Gesamthöhe von seinem Boden nach oben erstreckt.

10. Vorrichtung nach Anspruch 8 oder 9, **dadurch gekennzeichnet, dass** der Behälter (100) durch wenigstens eine Zwischenwand (121, 122) in wenigstens zwei nicht vollständig voneinander getrennte Kammern (101, 102, 103) geteilt ist.

11. Vorrichtung nach Anspruch 10, **dadurch gekennzeichnet, dass** die Kammern (101, 102, 103) im unteren Bereich (104) offen sind.

12. Vorrichtung nach einem der Ansprüche 10 oder 11, **dadurch gekennzeichnet, dass** die Zuleitung (110) in die erste Kammer (101) mündet, in welcher Gas aus der Suspension durch Entgasen entweicht und durch eine Leitung (111) abgezogen werden kann und dass wenigstens eine Abzugsleitung (112, 113) für die Suspension C im Bereich wenigstens einer anderen Kammer (102, 103) vorgesehen ist.

13. Vorrichtung nach einem der Ansprüche 10 bis 12, **dadurch gekennzeichnet, dass** drei Kammern (101, 102, 103) vorgesehen sind, wobei in einer Kammer (101) die Zuleitung (110) für die Suspension A mündet und in die beiden anderen Kammern (102, 103) eine Abzugsleitung (112, 113) für die Suspension C vorgesehen sind.

14. Vorrichtung nach Anspruch 13, **dadurch gekennzeichnet, dass** die horizontale Querschnittsfläche der zweiten Kammer zur horizontalen Querschnittsfläche der dritten Kammer in einem Verhältnis von zwei zu drei steht.

15. Verwendung der Vorrichtung nach einem der Ansprüche 8 bis 14 zur Abtrennung von Katalysatorfeinkorn aus einem Produktstrom einer Fischer-Tropsch-Synthese.

16. Verwendung der Vorrichtung nach einem der Ansprüche 8 bis 14 zur Abtrennung von deaktiviertem Katalysator aus einem Produktstrom einer Fischer-Tropsch-Synthese.
